# EUROPEAN PATENT APPLICATION

(11) **EP 1 595 587 A1**
(43) Date of publication of application: **16.11.2005**
(21) Application number: 03772810.2
(22) Date of filing: 17.11.2003
(51) Int. Cl.: B01D 15/00, B01D 61/00, B01D 63/00

(54) **METHOD OF CONCENTRATING AND REMOVING HARMFUL SUBSTANCE USING DOUBLE-STRANDED DNA AND ADSORBENT AND APPARATUS THEREFOR**

(30) Priority: 16.01.2003 JP 2003008310
(71) Applicant: Nissei Bio Co., Ltd., Hokkaido 061-1374 (JP)
(72) Inventor: LIU, Xiang Dong, Sapporo-shi, Hokkaido 065-0012 (JP); MATSUNAGA, Masaji, Sumida-ku, Tokyo 130-0012 (JP); NISHI, Norio, Sapporo-shi, Hokkaido 007-0841 (JP)
(74) Representative: HOFFMANN EITLE
(86) International application number: PCT/JP2003/014571
(87) International publication number: WO 2004/062767

(57) **Abstract**

There is provided a method of removing harmful substance **characterized by** comprising contacting a harmful substance-containing liquid to be treated with a double-stranded DNA, adsorbing the harmful substance onto the double-stranded DNA through intercalation, and separating it. The method is particularly useful for removing dioxins, and can be carried out by contacting a liquid to be treated with an adsorbent comprising a double-stranded DNA or a solution containing a double-stranded DNA enclosed in a container or a bag made of a membrane that is permeable for the harmful substance but is not permeable for the double-stranded DNA.

## Description

### Technical Field

The present invention relates to a method and an apparatus in which a harmful substance, particularly dioxins are concentrated and/or removed from a liquid such as water, milk or breast milk, etc. by using of a double-stranded DNA.

### Background Art

Dioxins including polychlorinated dibenzo-p-dioxin (PCDD), polychlorinated dibenzofuran (PCDF) and coplanar polychlorinated biphenyl (PCB) are harmful substances that are taken in through food chain and accumulated in a number of organisms. As these dioxins are liable to have an adverse effect on human body even in an extremely slight amount, it is an important subject to inhibit generation of dioxins and remove dioxins from a polluted environment. In particular, dioxins in water such as rivers or lakes, etc. are present in a state which dioxins are adhered on the surface of insoluble fine particles or in a state which dioxins are dissolved in water. The former could be removed by aggregating with the fine particles, but the latter was very difficult to be removed.

Means for removing dioxins dissolved in water includes a removal of dioxins by charging a liquid to be treated into a membrane separation apparatus in which active carbon is fluidized, adsorbing dioxins dissolved in water on the active carbon, and removing solid contents such as the active carbon or suspended substance, etc. by membrane separation and thereby removing dioxins (for example, see JP A 2002-239347). In this means, dioxins can be removed by adsorbing dissoluble dioxins on active carbon, and filtering dioxins adsorbed on the active carbon and solid contents through a membrane.

An object of the present invention is to provide a method in which a harmful substance such as dioxins dissolved in water, milk or breast milk, etc. can be removed in an efficient manner and at a low cost; a harmful substance adsorbent used therefor, and an apparatus used therefor.

### Disclosure of Invention

The present inventors, as a result of eager research, found that harmful substance dissolved in liquid such as water, milk or breast milk, etc. can be efficiently concentrated and/or removed by taking advantage of so-called intercalation that an aromatic compound having a planar structure is inserted between base pairs of double-stranded DNA having double helix structure, and completed the present invention.

Therefore, the present invention relates to a method of removing harmful substance characterized by comprising contacting a harmful substance-containing liquid to be treated with a double-stranded DNA, adsorbing the harmful substance onto the double-stranded DNA through intercalation, and separating it.

In addition, the present invention relates to an adsorbent used for the method of removing harmful substance, comprising a double-stranded DNA or a solution containing a double-stranded DNA enclosed in a container or a bag made of a membrane that is permeable for the harmful substance but is not permeable for the double-stranded DNA.

Further, the present invention relates to an apparatus for removing harmful substance, which is used for the method of removing harmful substance and which comprises a contact bath having at least two spaces that is divided by a membrane that is permeable for a harmful substance but is not permeable for a double-stranded DNA; a double-stranded DNA solution circulating means for circulating a double-stranded DNA containing solution and flowing the double-stranded DNA containing solution in one space through the membrane; and a means for circulating a liquid to be treated, for circulating a harmful substance-containing liquid to be treated, and flowing the liquid to be treated in the other space through the membrane, and wherein the harmful substance is transmitted through the membrane from the liquid to be treated to the double-stranded DNA containing solution, and separated; and also relates to an apparatus for removing harmful substance characterized by comprising a contact bath having an adsorbent containing a double-stranded DNA in non-free state; and a means for circulating a liquid to be treated, for circulating a harmful substance-containing liquid to be treated, in such a manner that the liquid is flown in the contact bath, and wherein the adsorbent comprises a double-stranded DNA or a solution containing a double-stranded DNA enclosed in a container or a bag made of a membrane that is permeable for the harmful substance but is not permeable for the double-stranded DNA, and wherein the harmful substance is transmitted from the liquid to be treated to the adsorbent, and separated.

### Brief Description of Drawings

Fig. 1 is a schematic view showing an embodiment of an apparatus for removing harmful substance according to the present invention;
Fig. 2 is a schematic view showing an embodiment of the contact bath in Fig. 1;
Fig. 3 is a schematic view showing another embodiment of an apparatus for removing harmful substance according to the present invention; and
Fig. 4 is a perspective view showing an embodiment of an adsorbent according to the present invention.

### Best Mode for Carrying Out the Invention

The double-stranded DNA used in the present invention is composed of two polynucleotide chains having right-handed helix. Planar bases having structural complementarity each other project from the sugar-phosphate backbones of the two polynucleotide chains perpendicularly to the helical axis toward the center of the helix, and are attached by hydrogen bonds. There are gaps of a width of ca. 1.1 nm and a height of ca. 0.34 nm between base pairs of the double-stranded DNA in case of B type structure, small molecules having planar structure can be inserted in the gaps, and this is called intercalation. This phenomenon is occasionally accelerated by the electric charge or hydrophobicity of the small molecules. As dioxins have a planar structure consisting of plural benzene rings and show hydrophobicity, it is anticipated to remove dioxins from water by use of double-stranded DNA.

As the above-mentioned double-stranded DNA, for example ones in which milt of fish is used as raw material can be used. It is known that the milt of fish contains double-stranded DNA and proteins in quantity, and is very nutritious food material. However, a very small part of the milt of fish is only utilized as food eaten in the fresh, and the area in which it is used is limited due to difficulty of processing, storage stability or the like, and the majority thereof has been discarded. In particular, the milt of salmon landed in quantity at Hokkaido in Japan has been used as animal feeding stuff or plant food or discarded in an amount of 10,000 tons or more per year. Therefore, the milt of fish containing a large amount of double-stranded DNA is particularly suitable as raw material for a large-scale production of double-stranded DNA in a low cost. The fish includes for example salmon, herring, trout, cod and the like. Double-stranded DNA can be obtained by removing skin, muscle, vein and the like from these milt, then purifying it to delete oil contents.

Although the harmful substance that can be treated according to the present invention includes ones over a wide range, organic compounds having flat steric structure, such as compounds having aromatic ring can be preferably treated due to the use of intercalation into double-stranded DNA. Particularly, the present invention is preferably applied in the treatment of dioxins such as dibenzo-p-dioxin (DD), dibenzofuran (DF), biphenyl (BP), polychlorinated dibenzo-p-dioxin (PCDD), polychlorinated dibenzofuran (PCDF), coplanar polychlorinated biphenyl (PCB) or the like.

In the method of removing harmful substance according to the present invention, the manner of contacting a liquid to be treated with double-stranded DNA is not specifically limited, and includes for example a process in which a liquid to be treated and double-stranded DNA are contacted through a membrane that is permeable for harmful substance but is not permeable for the double-stranded DNA so that the double-stranded DNA may not pass into the liquid to be treated. In this process, contact area between a double-stranded DNA containing solution and the liquid to be treated can be increased by using the membrane in a form of hollow thread, and thus treatment efficiency of liquid to be treated can be improved.

The manner of contacting a liquid to be treated with double-stranded DNA also includes a process in which an adsorbent containing a double-stranded DNA in non-free state is contacted with the liquid to be treated. In this process, the liquid to be treated is charged in a receiving bath, and the adsorbent is introduced in the receiving bath. Optionally, it is preferable to circulate or stir the liquid to be treated in the receiving bath to increase in the contact efficiency between the adsorbent and the liquid to be treated.

The adsorbent includes for example a gel formed by immobilizing double-stranded DNA in an acrylamide gel. The gel can be formed in a cylindrical shape, disk shape or the like. In addition, a bead-shaped gel having generally uniform particle diameter can be formed depending on the process of producing the gel. Further, other embodiments of the adsorbent include one formed by immobilizing double-stranded DNA in polysulfone. Polysulfone can be easily formed in bead shape, laminate shape or the like. Particularly, the adsorbent formed by immobilizing double-stranded DNA in polysulfone formed in a shape of hollow thread has a large contact area with the harmful substance-containing liquid to be treated and is improved in treatment efficiency.

The specific embodiment of the adsorbent is one comprising a double-stranded DNA or a solution containing a double-stranded DNA enclosed in a container made of a membrane that is permeable for the harmful substance but is not permeable for the double-stranded DNA. In the adsorbent, the harmful substance in the liquid to be treated penetrates the membrane and is adsorbed on double-stranded DNA, on the other hand, as the double-stranded DNA does not penetrate the membrane, the harmful substance can be transmitted to the double-stranded DNA containing solution and efficiently removed.

Further, in the present invention, the harmful substance intercalated into double-stranded DNA can be desorbed from the double-stranded DNA by extraction with an organic solvent. The double-stranded DNA containing solution or the double-stranded DNA containing adsorbent can be re-used by regeneration.

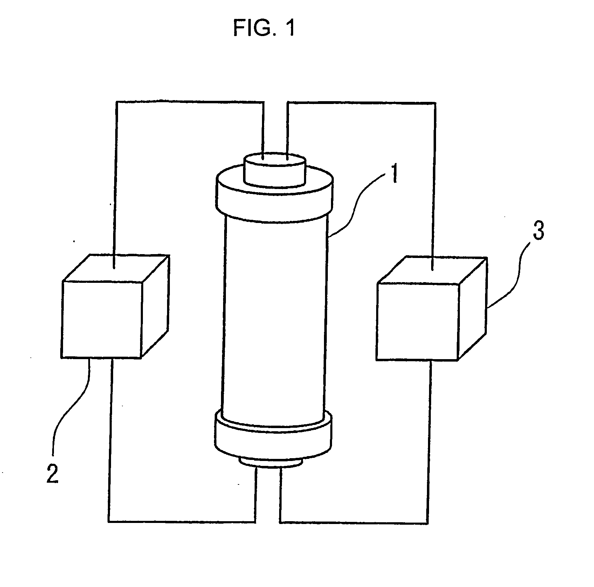

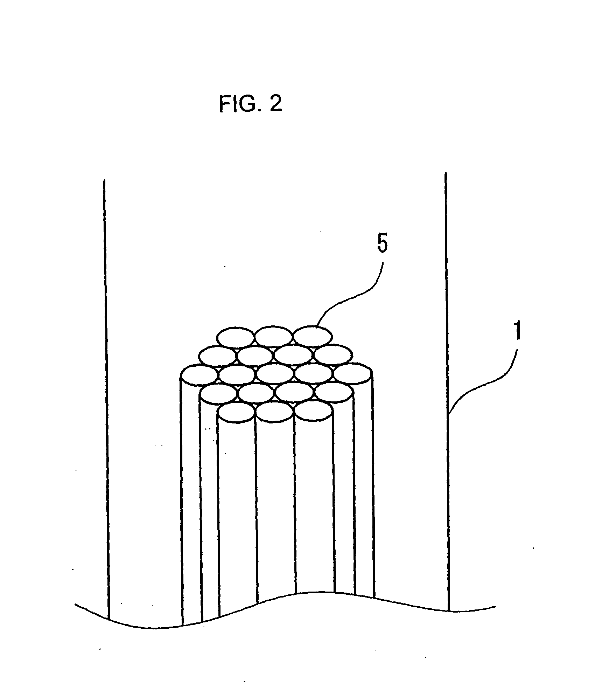

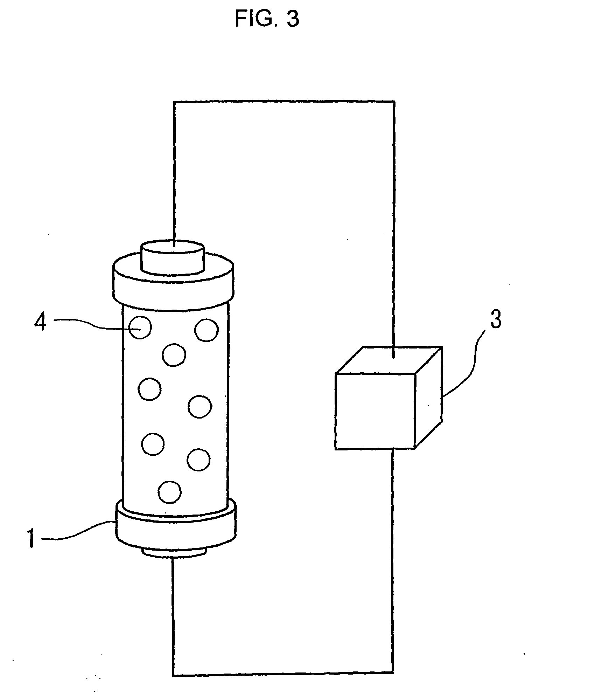

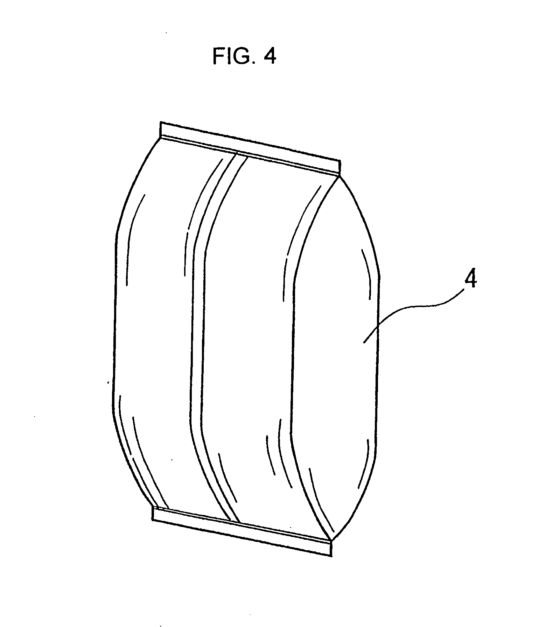

Hereinafter, the present invention is described in more detail by reference to drawings. Fig. 1 is a schematic view showing an embodiment of an apparatus for removing harmful substance according to the present invention, Fig. 2 is a schematic view showing an embodiment of the contact bath in Fig. 1, Fig. 3 is a schematic view showing another embodiment of an apparatus for removing harmful substance according to the present invention, and Fig. 4 is a perspective view showing an embodiment of an adsorbent according to the present invention.

The apparatus for removing harmful substance according to the embodiment shown in Fig. 1 is composed of a circulating means of double-stranded DNA containing solution 2, a circulating means of liquid to be treated 3, and a contact bath 1 connected to the circulating means of double-stranded DNA containing solution 2 and the circulating means of liquid to be treated 3.

The circulating means of double-stranded DNA containing solution 2 is for example a pump for circulating a double-stranded DNA containing solution, and the double-stranded DNA in the solution functions as substance for adsorbing harmful substance in the apparatus for removing harmful substance according to the present invention. The concentration of the double-stranded DNA containing solution is about 0.1 to 10 µM (bp), for example, depending on the amount of harmful substance to be treated, time in which treatment should be completed, or the like.

The circulating means of liquid to be treated 3 is for example a pump for circulating the liquid to be treated containing harmful substance to be concentrated and/or removed from water. The concentration of harmful substance in the liquid to be treated is not specifically limited, and for example even when the harmful substance is present in an extremely law concentration of ppb level, the apparatus for removing harmful substance according to the present invention permit an efficient treatment.

The contact bath 1 has a membrane that is permeable for harmful substance but is not permeable for double-stranded DNA, and the interior of the contact bath 1 is divided into at least two spaces with the membrane. And, a double-stranded DNA containing solution is circulated in the one space, while a liquid to be treated is circulated in the other space. For the membrane, can be used for example a semipermeable membrane having a pore size through which small molecules having a molecular weight of some hundreds, like dioxins penetrate but macro molecules having a molecular weight of 5 million or more do not penetrate, and such a semipermeable membrane can be commercially available.

The mode for dividing the space in the contact bath 1 by providing the membrane is not specifically limited so long as both the double-stranded DNA containing solution and the liquid to be treated can be circulated and both of them can be contacted. For example, the following structures can be applied: a simple structure in which the contact bath 1 is divided into two spaced by one membrane, a structure in which the contact bath 1 is divided into upper and lower parts, or a structure in which the contact bath 1 is divided in a form of doughnut so as to become a cylindrical double bath. However, from viewpoint of the treatment principal of the apparatus for removing harmful substance according to the present invention, the larger the contact area between the double-stranded DNA containing solution and the liquid to be treated becomes, the higher the treatment efficiency becomes.
Therefore, for example, as shown in Fig. 2, the contact bath 1 in which either the double-stranded DNA containing solution or the liquid to be treated is passed inside a number of hollow threads 5 made of semipermeable membrane and the other is passed outside the hollow threads 5, is improved in the contact area between the double-stranded DNA containing solution and the liquid to be treated, and thereby showing a high treatment efficiency.

The removal of harmful substance by use of the apparatus for removing harmful substance having the above-mentioned constitution is carried out by circulating a double-stranded DNA containing solution in one space of the contact bath 1 by the circulating means of double-stranded DNA containing solution 2, and on the other hand by circulating a liquid to be treated in the other space of the contact bath 1 by the circulating means of liquid to be treated 3. In this process, the liquid to be treated may be circulated directly from lakes, water tanks or the like storing liquid to be treated, or may be circulated after it was transferred to a water tank. In addition, each liquid may be circulated to arbitrary directions. Consequently, a double-stranded DNA containing solution and a liquid to be treated are contacted in the contact tank 1 through the membrane, harmful substances such as dioxins contained in the liquid to be treated penetrate the membrane in the contact bath 1 and are intercalated into the double-stranded DNA contained in the double-stranded DNA containing solution. The double-stranded DNA into which harmful substances are intercalated does not penetrate the membrane, and therefore harmful substances are removed from the liquid to be treated, and concentrated in the double-stranded DNA containing solution.

The harmful substances concentrated in the double-stranded DNA containing solution are finally treated by any known methods such as incineration. In addition, when the double-stranded DNA containing solution that contains the double-stranded DNA into which harmful substances are intercalated is mixed with an organic solvent such as hexane, the harmful substances intercalated into the double-stranded DNA are desorbed from the double-stranded DNA, and transferred to the organic solvent. According to the above-mentioned process, the double-stranded DNA into which harmful substances are intercalated to saturation can be also regenerated.

The apparatus for removing harmful substance having the embodiment shown in Fig. 3 is composed of a circulating means of liquid to be treated 3, and a contact bath 1 connected to the circulating means of liquid to be treated 3 and containing an adsorbent 4.

The adsorbent 4 contains double-stranded DNA without liberation thereof, and is obtained by chemically linking the double-stranded DNA on a carrier such as a high-molecular weight compound. The shape thereof is not specifically limited, and may be spherical, fiber-like, sheet-like or the like. For improving contact efficiency between double-stranded DNA and liquid to be treated, is preferable the adsorbent obtained by linking a double-stranded DNA on the surface of a porous carrier. In addition, can be also used the adsorbent 4 obtained by filling a double-stranded DNA containing solution containing a double-stranded DNA in bag made of semipermeable membrane that is permeable for harmful substance but is not permeable for the double-stranded DNA.

The removal of harmful substance by use of the apparatus for removing harmful substance having the above-mentioned constitution is carried out by placing the adsorbent 4 in the contact bath 1, and circulating a liquid to be treated in the contact bath 1 by the circulating means of liquid to be treated 3. Consequently, harmful substances such as dioxins contained in the liquid to be treated are intercalated into the double-stranded DNA contained in the adsorbent 4, and thus harmful substances are removed from the liquid to be treated. Next, the adsorbent 4 in which harmful substances are adsorbed is taken out of the contact bath 1, and treated by any known processes.

Further, in case where the activity for adsorbing harmful substance of the adsorbent 4 is lowered, the circulation of the liquid to be treated is stopped, and an organic solvent is circulated in the contact bath 1, thereby desorbing and transferring the harmful substances from the adsorbent 4 containing double-stranded DNA into which harmful substances are intercalated to the organic solvent. Consequently, the adsorbent 4 is regenerated, and the harmful substances are extracted in the organic solvent.

The adsorbent 4 shown in Fig. 4 is obtained by enclosing a double-stranded DNA or a double-stranded DNA containing solution in a container or a bag made of a membrane that is permeable for the harmful substance but is not permeable for the double-stranded DNA. As the membrane, any semipermeable membrane that is permeable for a harmful substance but is not permeable for a double-stranded DNA can be used. An adsorbent can be produced by preparing for example a bag made of the semipermeable membrane, and enclosing a double-stranded DNA or a solution containing a double-stranded DNA in a desired concentration so as not to leak. The bag can be formed for example by pasting membranes together to produce a tubular body and sealing the top and bottom thereof.

### Example 1: Removal of dioxins by use of double-stranded DNA containing solution

A solution containing dioxins of dibenzo-p-dioxin (DD), dibenzofuran (DF) and biphenyl (BP) in a concentration of 1 mg/ml respectively was prepared as a model liquid to be treated. The model liquid to be treated was contacted with a double-stranded DNA containing solution containing double-stranded DNA originating from salmon milt in a concentration of 6.8 µM (bp) through a semipermeable membrane for 96 hours at a flow rate of 100 ml/minute.

Upon completion of the contact, the concentrations of dioxins in the model liquid to be treated and the double-stranded DNA containing solution were compared, and it was found that the dioxin concentration of the double-stranded DNA containing solution was some hundreds times that of the model liquid to be treated and that dioxins were concentrated in the double-stranded DNA containing dioxins.

Next, hexane was added into a double-stranded DNA containing solution containing dioxins in a high concentration and penetrated at room temperature for 6 hours. This enabled extraction of dioxins into hexane. The harmful substance removing activity of the double-stranded DNA containing solution regenerated as above was nearly equal to that of the double-stranded DNA containing solution that had not been contacted with the liquid to be treated.

### Example 2: Production of adsorbent

A solution of a double-stranded DNA containing solution containing double-stranded DNA originating from salmon milt in 6.8 mM (bp) was prepared. A bag having a size: length of 10 cm, width of 5 cm and thickness of 2 cm was also formed from dialysis membrane of 1 kD cut-off. Each of the bags was filled with 50 ml of the solution and sealed to produce adsorbents.

### Industrial Applicability

According to the present invention, harmful substances such as dioxins dissolved in water, milk or breast milk, etc. can be efficiently concentrated and/or removed by intercalating the harmful substances between base pairs of a double-stranded DNA. Further, as the double-stranded DNA, can be used those originating from the milts of fishes the most part of which had been discarded conventionally. Therefore, treatment cost can be lowered.

## Claims

1. A method of removing harmful substance **characterized by** comprising contacting a harmful substance-containing liquid to be treated with a double-stranded DNA, adsorbing the harmful substance onto the double-stranded DNA through intercalation, and separating it.

2. The method of removing harmful substance according to claim 1, wherein the harmful substance is dioxins.

3. An adsorbent used for the method of removing harmful substance according to claim 1, **characterized by** comprising a double-stranded DNA or a solution containing a double-stranded DNA enclosed in a container or a bag made of a membrane that is permeable for the harmful substance but is not permeable for the double-stranded DNA.

4. An apparatus for removing harmful substance, which is used for the method of removing harmful substance according to claim 1, **characterized in that** comprises
a contact bath having at least two spaces that is divided by a membrane that is permeable for a harmful substance but is not permeable for a double-stranded DNA; a double-stranded DNA solution circulating means for circulating a double-stranded DNA containing solution and flowing the double-stranded DNA containing solution in one space through the membrane; and
a means for circulating a liquid to be treated, for circulating a harmful substance-containing liquid to be treated, and flowing the liquid to be treated in the other space through the membrane,
and wherein the harmful substance is transmitted through the membrane from the liquid to be treated to the double-stranded DNA containing solution, and separated.

5. The apparatus for removing harmful substance according to claim 4, wherein the membrane is formed of hollow threads, and the contact bath is divided into a space outside the hollow threads and a space inside the hollow threads.

6. An apparatus for removing harmful substance, which is used for the method of removing harmful substance according to claim 1, **characterized in that** comprises
a contact bath having an adsorbent containing a double-stranded DNA in non-free state; and
a means for circulating a liquid to be treated, for circulating a harmful substance-containing liquid to be treated, in such a manner that the liquid is flown in the contact bath,
and wherein the adsorbent comprises a double-stranded DNA or a solution containing a double-stranded DNA enclosed in a container or a bag made of a membrane that is permeable for the harmful substance but is not permeable for the double-stranded DNA,
and wherein the harmful substance is transmitted from the liquid to be treated to the adsorbent, and separated.
